# EUROPEAN PATENT SPECIFICATION

(11) **EP 2 625 370 B1**
(45) Date of publication and mention of the grant of the patent: **03.12.2014**
(21) Application number: 11770637.4
(22) Date of filing: 05.10.2011
(51) Int. Cl.: E21B 21/06

(54) **METHOD AND APPARATUS FOR FLUID TREATMENT**
VERFAHREN UND VORRICHTUNG ZUR FLÜSSIGKEITSBEHANDLUNG
PROCÉDÉ ET APPAREIL POUR LE TRAITEMENT DE FLUIDES

(30) Priority: 08.10.2010 US 391379 P
(43) Date of publication of application: 14.08.2013
(73) Proprietor: National Oilwell Varco, L.P., Houston, Texas 77036 (US); Doctor, Romil, Houston, Texas 77041 (US)
(72) Inventor: VASILIU, Cornelia Elisabeta Cretiu, Houston Texas 77042 (US); DOCTOR, Romil, Houston Texas 77041 (US)
(74) Representative: Beck Greener
(86) International application number: PCT/US2011/054930
(87) International publication number: WO 2012/048003

(56) References cited:
- WO-A1-92/21917
- GB-A- 2 166 472
- US-A- 4 603 735
- US-A- 4 658 893
- US-A- 5 560 831
- US-A1- 2008 131 314
- US-B1- 6 723 233

## Description

This application claims benefit of U.S. provisional patent application Serial No. 61/391,379 filed October 8, 2010, entitled "Method and Apparatus for Fluid Treatment."

### BACKGROUND

The disclosure relates generally to apparatus and methods for treating contaminated fluids. More particularly, the disclosure relates to a system and method for treating contaminated fluids with ozone gas.

Bacteria are a common contaminant in water produced from oil or natural gas wells. Such produced water can contain high enough quantities of bacteria to cause microbially induced corrosion, plug equipment, or plug the geological formation downhole if returned to the well. A common practice in the oilfield is to introduce bactericides into fluids for downhole use. Some bactericides may be toxic and harmful to other forms of life if lost from containment. Due to the volumes of fluid involved in oilfield processes, the bactericides are also a significant expense.

Accordingly, there is a need for systems and methods that enable economical treatment of fluids contaminated with bacteria using substances that are not harmful to other forms of life and that do not otherwise negatively impact the environment.

### SUMMARY

Systems and methods for treating, or mixing, a fluid with a gas are disclosed. In some embodiments, the system includes an inlet section in fluid communication with a fluid source and a gas source, a nozzle, and a flow reverser. The inlet section has a throughbore in which the fluid and the gas combine to form a treated fluid. The nozzle receives the treated fluid from the inlet section and accelerates the treated fluid. The flow reverser has an open end in fluid communication with the nozzle and a closed end. The nozzle is oriented relative to the flow reverser to direct the treated fluid toward the closed end of the flow reverser. The flow reverser receives the treated fluid from the nozzle and mixes the treated fluid.

In some embodiments, the system further includes a pump coupled between the fluid source and the inlet section and an ozone generator as the gas source.

Some methods for treating a fluid containing bacteria include combining the fluid with an ozone gas, thereby forming a treated fluid; accelerating the treated fluid; and inducing turbulence into the treated fluid.

US 6,723,344 describes an apparatus for fitting an ozone generator to a hot tub or spa in order to eradicate bacteria within the piping system. US4,658,893 describes a jet pump for down-hole use in oil wells.

Thus, embodiments described herein comprise a combination of features and characteristics intended to address various shortcomings associated with conventional systems and methods for treating contaminated fluids. The various characteristics described above, as well as other features, will be readily apparent to those skilled in the art upon reading the following detailed description of the preferred embodiments, and by referring to the accompanying drawings.

### BRIEF DESCRIPTION OF THE DRAWINGS

For a detailed description of the disclosed embodiments, reference will now be made to the accompanying drawings in which:
FIG. 1A is a side view of an ozone mixer in accordance with principles disclosed herein;
FIG. 1B is an axial, cross-sectional view of the ozone mixer of FIG. 1A;
FIGS. 1C and 1D are radial, cross-sectional views of the ozone mixer of FIGS. 1A and 1B;
FIG. 2 is a perspective view of the flow reverser as may be employed with the ozone mixer of FIGS. 1B, 1C, and 1D; and
FIG. 3 is a schematic representation of a treatment system, including the ozone mixer of FIGS. 1A and 1B, for treating produced water in accordance with principles disclosed herein.

### DETAILED DESCRIPTION OF THE DISCLOSED EMBODIMENTS

The following description is directed to exemplary embodiments of an apparatus and associated methods for treating contaminated fluids. The embodiments disclosed should not be interpreted, or otherwise used, as limiting the scope of the disclosure, including the claims. One skilled in the art will understand that the following description has broad application, and that the discussion is meant only to be exemplary of the described embodiments, and not intended to suggest that the scope of the disclosure, including the claims, is limited only to those embodiments.

Certain terms are used throughout the following description and the claims in referring to particular features or components. As one skilled in the art will appreciate, different persons may refer to the same feature or component by different names. This document does not intend to distinguish between components or features that differ in name but not function. Moreover, the drawing figures are not necessarily to scale. Certain features and components described herein may be shown exaggerated in scale or in somewhat schematic form, and some details of conventional elements may not be shown in interest of clarity and conciseness.

In the following discussion and in the claims, the terms "including" and "comprising" are used in an open-ended fashion, and thus should be interpreted to mean "including, but not limited to...." Also, the term "couple" or "couples" is intended to mean either an indirect or direct connection. Thus, if a first device couples to a second device, the connection between the first device and the second device may be through a direct connection, or through an indirect connection via other intermediate devices and connections. Further, the terms "axial" and "axially" generally mean along or parallel to a given axis. The terms "radial" and "radically" generally mean perpendicular to the given axis, while the terms "circumferential" and "circumferentially" generally mean disposed about the circumference, and as such, perpendicular to both the central or longitudinal axis and a radial axis normal to the central longitudinal axis. As used herein, these terms are consistent with their commonly understood meanings with regard to a cylindrical coordinate system.

Ozone is an effective disinfectant for water and air. Unlike chemical bactericides, after treating a contaminated fluid containing bacteria with ozone, the ozone breaks down into nontoxic oxygen (O₂) gas that does not harm forms of life other than the bacteria. The low solubility and short half-life of ozone at atmospheric pressure and temperature, however, present problems in using it to treat water-based fluids via conventional means. Even so, ozone still has the potential to be an effective bactericide because ozone can kill bacteria nearly instantaneously upon contact. To use ozone effectively, the ozone gas needs to be rapidly and thoroughly mixed with the contaminated fluid.

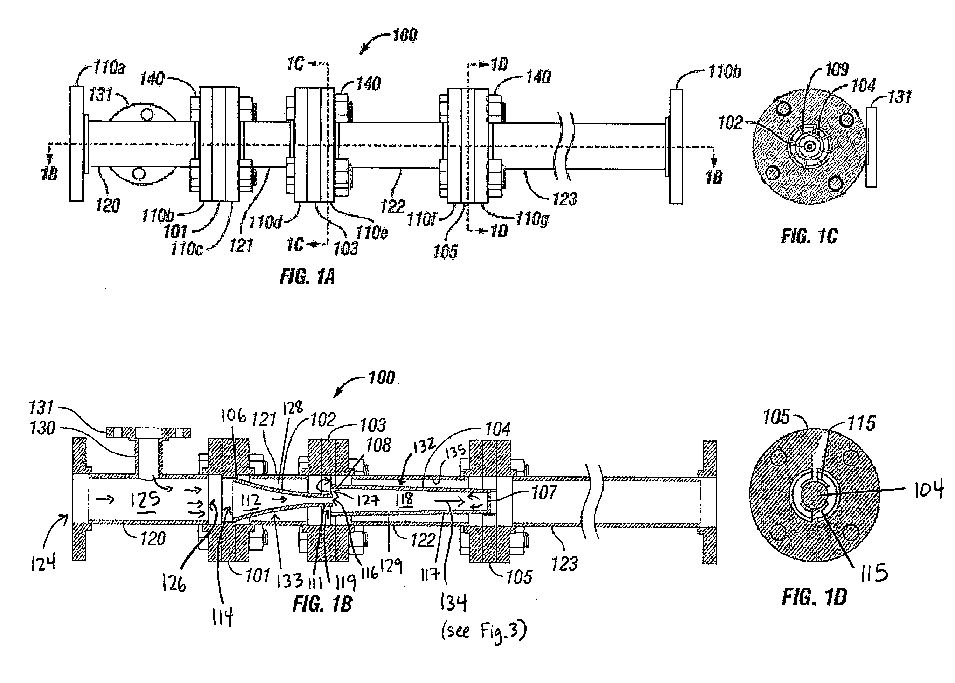

An ozone mixer 100 in accordance with principles disclosed herein is shown in FIGS. 1A-1D. The ozone mixer 100 includes an inlet section 120, a nozzle section 121, a mixing section 122, and an outlet section 123. In this embodiment, each section 120, 121, 122, 123 is made from a tubular, fluid-conveying member welded at each end to a flange 110 to provide a modular system that allows access to and replacement of internal components described below. In this embodiment, the flanges 110 of adjacent sections 120, 121, 122, 123 are coupled to each other using threaded fasteners 140. In at least certain embodiments, sections 120, 121, 122 and 123 are made of stainless steel or other corrosion-resistant material.

The inlet section 120 receives a contaminated fluid and ozone gas to treat the contaminated fluid. The inlet section 120 has a fluid inlet 124, an ozone inlet 130, a throughbore 125, an outlet 126, and an ozone inlet flange 131. The ozone inlet flange 131 enables coupling of an ozone generator (not shown) to the ozone inlet 130. During operation, the ozone mixer 100 receives a contaminated fluid through the fluid inlet 124 and ozone gas through the ozone inlet 130 into the throughbore 125 of the inlet section 125. Within the throughbore 125, the contaminated fluid and the ozone gas combine to form a treated fluid. The treated fluid, including the contaminated fluid and the ozone gas, flows from throughbore 125 through outlet 126 into the nozzle section 121.

Within the nozzle section 121, the treated fluid is accelerated. The nozzle section 121 includes a throughbore 128 in which a nozzle 102 is disposed. To resist corrosion, at least nozzle 102, in this embodiment, is made of stainless steel. An annulus 133 is formed between the nozzle 102 and the nozzle section 121. The nozzle 102 has an inlet end 106, an outlet end 111, and a throughbore 112 extending therebetween. At the inlet end 106 and the outlet end 111, the nozzle 102 further includes an inlet 114 and an outlet 116, respectively. The throughbore 112 is bounded by an inner surface of the nozzle 102 that is defined by a diameter which decreases from the inlet end 106 to the outlet end 111. Thus, the inlet 114 has a diameter exceeding that of the outlet 116. The inlet end 106 of the nozzle 102 is coupled to and supported by a nozzle fixture 101, which is, in turn, disposed between an inlet section flange 110b and a nozzle section flange 110c. The nozzle 102 may be coupled to nozzle fixture 101 by welding or other methods known in the art. The coupling of the nozzle 102 to the nozzle fixture 101 closes the annulus 133 at one end, leaving the opposing end of the annulus 133 open.

During operation, the treated fluid exhausted by the inlet section 120 is received by the nozzle 102 through the inlet 114. Because the cross-sectional area of the throughbore 112 decreases from the inlet end 106 of the nozzle 102 to the outlet end 111, the treated fluid is accelerated as the treated fluid passes through the nozzle 102 and has a velocity higher at the outlet 116 than at the inlet 114. The treated fluid exits the nozzle 102 through the outlet 116 into the mixing section 122.

The mixing section 122 induces micro-cavitation of the treated fluid. The mixing section 122 has a throughbore 129 in which a flow reverser 104 is disposed. An annulus 132 is formed between the flow reverser 104 and the mixing section 122. The flow reverser 104 has a body 117 with an open end 108, a closed or cap end 107, and an internal bore 118 extending therebetween and, in this embodiment, is made of stainless steel to resist corrosion. In some embodiments, the body 117 is conical in shape, having an outer diameter at the open end 108 greater than an outer diameter at the cap end 107. The flow reverser 104 further includes an opening 119 at the open end 108. The outlet end 111 of the nozzle 102 is disposed proximate to the opening 119 of the flow reverser 104, and in some embodiments, extends through opening 119 of the flow reverser 104 into the internal bore 118. The opening 119 has a diameter exceeding the outer diameter of the nozzle 102 at outlet end 111. Thus, an annulus 127 is formed between the inner surface of the flow reverser 104 and the outer surface of the nozzle 102 at the opening 119. The annulus 127 enables fluid communication between the internal bore 118 of the flow reverser 104 and the annuli 133, 132 of the nozzle and mixing sections 121, 122, respectively.

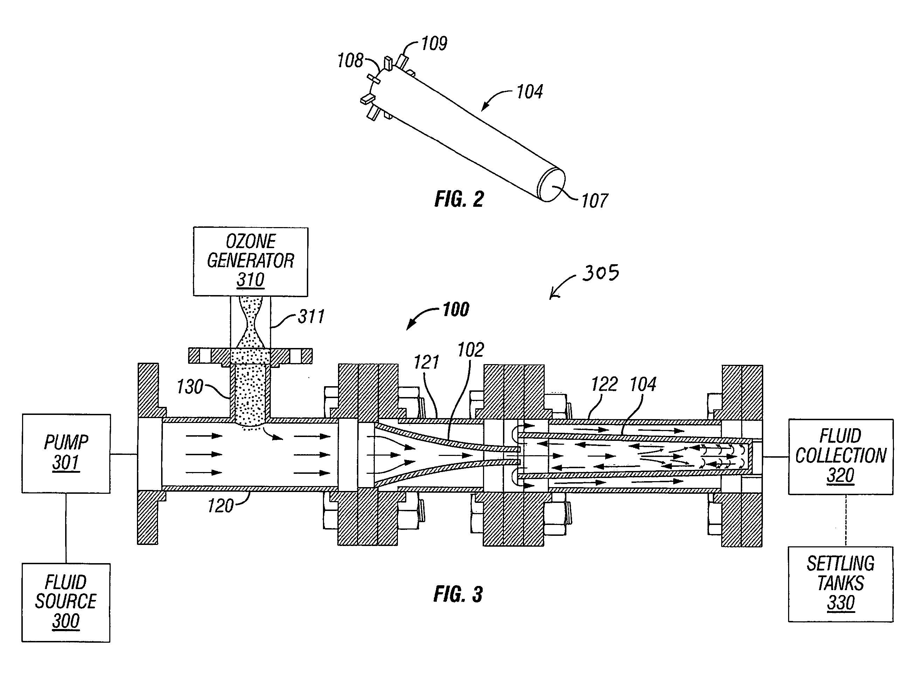

Referring briefly to FIG. 2, the flow reverser 104 further includes a plurality of circumferentially spaced apart fins 109. Each of fins 109 is coupled at an end to the outer surface of the flow reverser 104 proximate the open end 108 and extends radially outward therefrom. Returning to FIG. 1B, the opposite end of each fin 109 is coupled to a flow reverser fixture 103, which is, in turn, disposed between a nozzle section flange 110d and a flow reverser section flange 110e. The flow reverser 104 may be coupled to the flow reverser fixture 103 by welding or other methods known in the art. The fins 109 enable support and centering of the flow reverser 104 within the mixing section 122. Moreover, because the fins 109 are spaced apart, fluid communication is enabled between the annulus 133 of the nozzle section 121 and the annulus 132 of mixing section.

The cap end 107 of the flow reverser 104 is supported by a flow reverser support plate 105, which is, in turn, disposed between a flow reverser section flange 110f and an outlet section flange 110g. As best viewed in FIG. 1D, the flow reverser support plate 105 has two radially extending supports 115. The supports 115 are circumferentially spaced apart and receive the cap end 107 of the flow reverser 104 therebetween. Like the fins 109, the supports 115 enable support and centering of the flow reverser 104 within the mixing section 122. Moreover, because the supports 115 are spaced apart, fluid communication is enabled between the annulus 132 of the mixing section 122 and the outlet section 123.

During operation, the high velocity treated fluid exiting the outlet 116 of the nozzle 102 is received within the internal bore 118 of the flow reverser 104. Due to the positioning of the outlet 116 relative to the internal bore 118, the treated fluid is directed into the center of the flow reverser 104 toward the cap end 107, as illustrated by arrows 134. The arrows 134 indicate the direction of fluid flow within the flow reverser 104. At the cap end 107, the treated fluid impacts the flow reverser 104 and reverses flow direction. The treated fluid then flows along the inner wall 135 of the flow reverser 104 to annulus 127.

The relative sizes of the nozzle outlet 116 and the opening 119 of the flow reverser 104 induce micro-cavitation of the combined fluid. Micro-cavitation breaks the ozone gas into smaller bubbles to aid diffusion of the ozone gas into the contaminated fluid. The relative sizes of the nozzle outlet 116 and the opening 119 also induce turbulence within the internal bore 118 of the flow reverser 104 as the combined fluid exiting the nozzle outlet 116 expands radially toward the inner wall 135 of the flow reverser 104. The impact of the treated fluid with the cap end 107 and the inner wall 135 of the flow reverser 104 and the reversal in flow direction of the treated fluid due to impact with the cap end 107 increase the turbulence in the treated fluid. The turbulence, in turn, promotes thorough mixing and dissolving of the small bubbles of ozone gas, resulting from micro-cavitation, into the contaminated fluid. Moreover, the small bubbles of ozone gas may burst as they impact the cap end 107 and/or the inner wall 135 of the flow reverser 104. This further promotes the dissolution of the ozone gas into the contaminated fluid.

Upon reaching the annulus 27 between the nozzle outlet end 111 and the flow reverser 104, the ozone gas of the combined fluid is dissolved within the contaminated fluid. The treated fluid then passes through the annulus 27 into the annulus 133 of the nozzle section 121. Because the annulus 133 is closed at one end proximate the nozzle inlet end 106, the treated fluid again reverses direction and flows from the annulus 133 of the nozzle section 121 through the annulus 132 of the mixing section 122, between the supports 115 of the flow reverser support plate 105, and into the outlet section 123. After passing through the outlet section 123, the treated fluid exits the ozone mixer 100.

Due to the effects of cavitation, turbulent fluid flow, abrasives that may be present in the contaminated fluid, and the possibility of ozone oxidation, it is desirable that the flow reverser 104 and/or the nozzle 102 be replaceable. In the embodiment illustrated by FIG. 1B, the flow reverser 104 may be replaced by uncoupling the fasteners 140 that secure flanges 110e, 110f to the nozzle and outlet sections 121, 123, respectively, and removing the mixing section 122 from the remainder of the ozone mixer 100. Once the mixing section 122 is removed from the ozone mixer 100, the flow reverser 104 may be replaced. The mixing section 122 may then be reconnected to the ozone mixer 100. The nozzle 102 may be replaced in a similar fashion by removing and subsequently replacing the nozzle section 121 from the ozone mixer 100.

FIG. 3 illustrates an exemplary treatment system 305, including the ozone mixer 100 of FIGS. 1A, 1B, and 2, for treating produced water contaminated with bacteria and containing hydrocarbons to enable reuse of the treated water in a drilling process. The treatment system 305 includes a pump 301 operable to draw the produced water, contaminated with bacteria and containing hydrocarbons, from a fluid source 300 and to deliver the produced water into the inlet section 120 of the ozone mixer 100. In some embodiments, the pump 301 is a centrifugal pump.

The treatment system 305 further includes an ozone generator 310 and a venturi tube 311 coupled between the ozone generator 310 and the ozone inlet flange 131, previously described. The ozone generator 310 delivers ozone gas through the venturi tube 311 to the ozone inlet 130 of the ozone mixer 100 at a flow rate dependent upon the flow rate of produced water provided by the pump 301 to the inlet section 120 of the ozone mixer 100. In at least one embodiment, the ozone generator 310 delivers approximately ¼ gram to approximately ¾ gram of ozone gas per gallon of produced water delivered by the pump 301.

As previously described, the ozone gas and produced water are combined in the inlet section 120 of the ozone mixer 100, forming a treated fluid. The treated fluid is then conveyed into the nozzle section 121. Within the nozzle section 121, the treated fluid is accelerated by the nozzle 102 and delivered into the flow reverser 104 of the mixing section 122. Inside the flow reverser 104, the treated fluid experiences micro-cavitation, turbulence, and, at least in part, impact with the cap end 107 and the inner wall 135 of the flow reverser 104, yielding dissolution and thorough mixing of the ozone gas within the produced water.

The treatment system 305 further includes a fluid collection unit 320 and, in some embodiments, one or more settling tanks 330 downstream of the fluid collection unit 320. The fluid collection unit 320 receives the treated fluid exiting the outlet section 123 of the ozone mixer 100. The treated fluid is then conveyed from the fluid collection unit 320 through the one or more settling tanks 330, when present. The settling tank(s) 330 enables separation of hydrocarbons from the treated fluid. Excess dissolved ozone gas and broken down oxygen (O₂) gas in the treated fluid aid separation of the hydrocarbons from the remaining fluid. Hydrocarbons adhere to the ozone and oxygen gases. After the ozone and oxygen gases rise to the surface of the treated produced water within the settling tank(s) 330, the hydrocarbons may be skimmed or otherwise removed from the fluid surface.

While various embodiments have been shown and described, modifications thereof can be made by one skilled in the art without departing from the spirit and teachings herein. The embodiments herein are exemplary only, and are not limiting. Many variations and modifications of the apparatus and methods disclosed herein are possible and within the scope of the invention. Accordingly, the scope of protection is not limited by the description set out above, but is only limited by the claims which follow.

## Claims

1. A system for mixing a treatment gas in a fluid, the system comprising:
an inlet section (120) in fluid communication with a fluid source (300) and a gas source, the inlet section having a throughbore (125) in which the fluid and the gas combine to form a treated fluid;
a nozzle (102) accelerating the treated fluid received from the inlet section; and
a flow reverser (104) mixing the treated fluid received from the nozzle, wherein the flow reverser has an open end (108) in fluid communication with the nozzle and a closed end (107);
**characterized in that** the nozzle is oriented relative to the flow reverser to direct the treated fluid toward the closed end of the flow reverser.

2. The system of claim 1, further comprising a first tubular member (129) in which the flow reverser (104) is disposed, whereby a first annulus (132) is formed between the tubular member and the flow reverser, the first annulus being in fluid communication with the open end (108) of the flow reverser.

3. The system of claim 2, wherein the flow reverser further comprises a plurality of spaced fins (109) extending between the flow reverser (104) and the first tubular member (129), the fins centering the flow reverser within the first tubular member.

4. The system of any of claims 2 and 3, further comprising a second tubular member (128) in which the nozzle (102) is disposed, whereby an annulus (133) is formed between the second tubular member and the nozzle, and wherein the second annulus is in fluid communication with the first annulus (132).

5. The system of any of claims 1 to 4, wherein the flow reverser (104) is conical with the open end (108) having a diameter larger than the diameter of the closed end (107).

6. The system of any of claims 1 to 5, wherein the nozzle (102) has an inlet end with an inlet (114) receiving the treated fluid from the inlet section (120) and an outlet end with an outlet (116) through which the treated fluid is exhausted, the outlet having a diameter smaller than the diameter of the inlet.

7. The system of any of claims 1 to 6, further comprising:
a pump (301) connected to the fluid source (300);
wherein the treatment gas source comprises an ozone generator (310); and
an ozone mixer, comprising:
the inlet section (120) in fluid communication with the pump and the ozone generator, the nozzle (102) and the flow reverser (104).

8. The system of any of claims 1 to 7, further comprising:
an outlet section (123) receiving the treated fluid from the flow reverser (104); and
at least one settling tank (330) in fluid communication with the outlet section.

9. The system of any of claims 7 and 8, further comprising:
a venturi tube (311) disposed between the ozone generator (310) and the inlet section (120) of the ozone mixer.

10. A method for treating a fluid containing bacteria, the method comprising:
combining the fluid with an ozone gas, thereby forming a treated fluid;
accelerating the treated fluid; and
inducing turbulence in the treated fluid;
**characterized in that** inducing turbulence in the treated fluid comprises conveying the treated fluid in a first direction followed by reversing the direction of the treated fluid to cause it to flow in a second direction substantially opposite said first direction,
wherein reversing the direction of the fluid comprises conveying the treated fluid to impact a closed end of a conveying member.

11. The method of claim 10, wherein the accelerating comprises conveying the treated fluid through a nozzle (102).

12. The method of claim 10, wherein the inducing turbulence further comprises:
conveying the treated fluid from a nozzle (102) having an outlet (116) with a diameter into the conveying member, wherein the conveying member is tubular and has an inlet with a diameter larger than the diameter of the outlet; and
inducing micro-cavitation in the treated fluid.

13. The method of claim 10, wherein the conveying member is tubular.

14. The method of claim 13, wherein the inducing turbulence further comprises:
exhausting the treated fluid through an open end of the conveying member in a first direction; and
redirecting the treated fluid exhausted by the conveying member, whereby the treated fluid flows in a second direction opposite the first direction.

## Patentansprüche

1. System zum Mischen eines Behandlungsgases in einem Fluid, wobei das System folgendes umfasst:
einen Einlassabschnitt (120) in Fluidkommunikation mit einer Fluidquelle (300) und einer Gasquelle, wobei der Einlassabschnitt eine durchgehende Bohrung (125) aufweist, in der sich das Fluid und das Gas vereinen, so dass ein behandeltes Fluid gebildet wird;
eine Düse (102), welche das von dem Einlassabschnitt empfangene behandelte Fluid beschleunigt;
eine Strömungsumkehreinrichtung (104), die das von der Düse empfangene behandelte Fluid mischt, wobei die Strömungsumkehreinrichtung ein offenes Ende (108), das sich in Fluidkommunikation mit der Düse befindet, und ein geschlossenes Ende (107) aufweist;
**dadurch gekennzeichnet, dass** die Düse im Verhältnis zu der Strömungsumkehreinrichtung so ausgerichtet ist, dass sie das behandelte Fluid in Richtung des geschlossenen Endes der Strömungsumkehreinrichtung leitet.

2. System nach Anspruch 1, ferner umfassend ein erstes röhrenförmiges Element (129), in dem sich die Strömungsumkehreinrichtung (104) befindet, wobei ein erster Ring (132) zwischen dem röhrenförmigen Element und der Strömungsumkehreinrichtung ausgebildet wird, wobei sich der erste Ring in Fluidkommunikation mit dem offenen Ende (108) der Strömungsumkehreinrichtung befindet.

3. System nach Anspruch 2, wobei die Strömungsumkehreinrichtung eine Mehrzahl räumlich getrennter Finnen (109) umfasst, die sich zwischen der Strömungsumkehreinrichtung (104) und dem ersten röhrenförmigen Element (129) erstrecken, wobei die Finnen die Strömungsumkehreinrichtung in dem ersten röhrenförmigen Element zentrieren.

4. System nach Anspruch 2 oder 3, ferner umfassend ein zweites röhrenförmiges Element (128), in dem sich die Düse (102) befindet, wobei ein Ring (133) zwischen dem zweiten röhrenförmigen Element und der Düse ausgebildet ist, und wobei sich der zweite Ring in Fluidkommunikation mit dem ersten Ring (132) befindet.

5. System nach einem der Ansprüche 1 bis 4, wobei die Strömungsumkehreinrichtung (104) konisch ist, wobei das offene Ende (108) einen Durchmesser aufweist, der größer ist als der Durchmesser des geschlossenen Endes (107).

6. System nach einem der Ansprüche 1 bis 5, wobei die Düse (102) ein Einlassende mit einem Einlass (114) aufweist, der das behandelte Fluid von dem Einlassabschnitt (120) empfängt, und mit einem Auslassende mit einem Auslass (116), durch den behandeltes Fluid ausgestoßen wird, wobei der Auslass einen Durchmesser aufweist, der kleiner ist als der Durchmesser des Einlasses.

7. System nach einem der Ansprüche 1 bis 6, ferner umfassend:
eine Pumpe (301), die mit der Fluidquelle (300) verbunden ist;
wobei die Behandlungsgasquelle einen Ozongenerator (310) umfasst; und
einen Ozonmischer, umfassend:
den Einlassabschnitt (120) in Fluidkommunikation mit der Pumpe und dem Ozongenerator, der Düse (102) und der Strömungsumkehreinrichtung (104).

8. System nach einem der Ansprüche 1 bis 7, ferner umfassend:
einen Auslassabschnitt (123), der das behandelte Fluid von der Strömungsumkehreinrichtung (104) empfängt; und
mindestens einen Absetztank (330) in Fluidkommunikation mit dem Auslassabschnitt.

9. System nach einem der Ansprüche 7 oder 8, ferner umfassend:
ein Venturi-Rohr (311), das sich zwischen dem Ozongenerator (310) und dem Einlassabschnitt (120) des Ozonmischers befindet.

10. Verfahren zur Behandlung eines Bakterien enthaltenden Fluids, wobei das Verfahren folgendes umfasst:
Kombinieren des Fluids mit einem Ozongas, wodurch ein behandeltes Fluid gebildet wird;
Beschleunigen des behandelten Fluids; und
Induzieren einer Wirbelströmung in dem behandelten Fluid;
**dadurch gekennzeichnet, dass** das induzieren einer Wirbelströmung in dem behandelten Fluid das Leiten des behandelten Fluids in eine erste Richtung umfasst, gefolgt von einer Richtungsumkehr des behandelten Fluids, um zu bewirken, dass dieses in eine zweite Richtung strömt, die im Wesentlichen zu der ersten Richtung entgegengesetzt ist;
wobei die Richtungsumkehr des Fluids das Leiten des behandelten Fluids umfasst, so dass dieses auf ein geschlossenes Ende eines Förderelements stößt.

11. Verfahren nach Anspruch 10, wobei das Beschleunigen das Leiten des behandelten Fluids durch eine Düse (102) umfasst.

12. Verfahren nach Anspruch 10, wobei das Induzieren einer Wirbelströmung ferner folgendes umfasst:
Leiten des behandelten Fluids von einer Düse (102) mit einem Auslass (116) mit einem Durchmesser in das Förderelement, wobei das Förderelement röhrenförmig ist und einen Einlass mit einem Durchmesser aufweist, der größer ist als der Durchmesser des Auslasses; und
Induzieren einer Mikrokavitation in dem behandelten Fluid.

13. Verfahren nach Anspruch 10, wobei das Förderelement röhrenförmig ist.

14. Verfahren nach Anspruch 13, wobei das Induzieren einer Wirbelströmung ferner folgendes umfasst:
Ausstoßen des behandelten Fluids durch ein offenes Ende des Förderelements in eine erste Richtung; und
Umleiten des durch das Förderelement ausgestoßenen behandelten Fluids, wodurch das behandelte Fluid in eine zu der ersten Richtung entgegengesetzte zweite Richtung strömt.

## Revendications

1. Système de mélange d'un gaz de traitement dans un fluide, le système comprenant :
une section d'entrée (120) en communication fluidique avec une source de fluide (300) et une source de gaz, la section d'entrée ayant un alésage traversant (125) dans lequel le fluide et le gaz se combinent pour former un fluide traité ;
une buse (102) accélérant le fluide traité reçu de la section d'entrée ; et
un inverseur de flux (104) mélangeant le fluide traité reçu de la buse, dans lequel l'inverseur de flux a une extrémité ouverte (108) en communication fluidique avec la buse et une extrémité fermée (107) ;
**caractérisé en ce que** la buse est orientée par rapport à l'inverseur de flux pour diriger le fluide traité vers l'extrémité fermée de l'inverseur de flux.

2. Système selon la revendication 1, comprenant en outre un premier élément tubulaire (129), dans lequel l'inverseur de flux (104) est disposé, moyennant quoi un premier espace annulaire (132) est formé entre l'élément tubulaire et l'inverseur de flux, le premier espace annulaire étant en communication fluidique avec l'extrémité ouverte (108) de l'inverseur de flux.

3. Système selon la revendication 2, dans lequel l'inverseur de flux comprend en outre une pluralité d'ailettes espacées (109) s'étendant entre l'inverseur de flux (104) et le premier élément tubulaire (129), les ailettes centrant l'inverseur de flux au sein du premier élément tubulaire.

4. Système selon l'une quelconque des revendications 2 et 3, comprenant en outre un second élément tubulaire (128), dans lequel la buse (102) est disposée, moyennant quoi un espace annulaire (133) est formé entre le second élément tubulaire et la buse, et dans lequel le second espace annulaire est en communication fluidique avec le premier espace annulaire (132).

5. Système selon l'une quelconque des revendications 1 à 4, dans lequel l'inverseur de flux (104) est conique, l'extrémité ouverte (108) ayant un diamètre supérieur au diamètre de l'extrémité fermée (107).

6. Système selon l'une quelconque des revendications 1 à 5, dans lequel la buse (102) a une extrémité d'entrée avec une entrée (114) recevant le fluide traité de la section d'entrée (120) et une extrémité de sortie avec une sortie (116) à travers laquelle le fluide traité est évacué, la sortie ayant un diamètre inférieur au diamètre de l'entrée.

7. Système selon l'une quelconque des revendications 1 à 6, comprenant en outre :
une pompe (301) reliée à la source de fluide (300) ;
dans lequel la source de gaz de traitement comprend un générateur d'ozone (310) ; et
un mélangeur d'ozone, comprenant :
la section d'entrée (120) en communication fluidique avec la pompe et le générateur d'ozone, la buse (102) et l'inverseur de flux (104).

8. Système selon l'une quelconque des revendications 1 à 7, comprenant en outre :
une section de sortie (123) recevant le fluide traité de l'inverseur de flux (104) ; et
au moins une cuve de décantation (330) en communication fluidique avec la section de sortie.

9. Système selon l'une quelconque des revendications 7 et 8, comprenant en outre :
un tube de venturi (311) disposé entre le générateur d'ozone (310) et la section d'entrée (120) du mélangeur d'ozone.

10. Procédé de traitement d'un fluide contenant des bactéries, le procédé comprenant les étapes consistant à :
combiner le fluide avec un gaz ozone, formant ainsi un fluide traité ;
accélérer le fluide traité ; et
induire une turbulence dans le fluide traité ;
**caractérisé en ce que** l'induction de turbulence dans le fluide traité comprend l'étape consistant à transporter le fluide traité dans une première direction, suivie par l'étape consistant à inverser le sens du fluide traité pour l'amener à s'écouler dans une seconde direction sensiblement opposée à ladite première direction,
dans lequel l'inversion de la direction du fluide comprend l'étape consistant à transporter le fluide traité pour qu'il entre en contact avec une extrémité fermée d'un élément de transport.

11. Procédé selon la revendication 10, dans lequel l'accélération comprend l'étape consistant à transporter le fluide traité à travers une buse (102).

12. Procédé selon la revendication 10, dans lequel l'induction de turbulence comprend en outre les étapes consistant à :
transporter le fluide traité à partir d'une buse (102) ayant une sortie (116) avec un diamètre dans l'élément de transport, dans lequel l'élément de transport est tubulaire et a une entrée avec un diamètre supérieur au diamètre de la sortie ; et
induire une micro-cavitation dans le fluide traité.

13. Procédé selon la revendication 10, dans lequel l'élément de transport est tubulaire.

14. Procédé selon la revendication 13, dans lequel l'induction de turbulence comprend en outre les étapes consistant à :
évacuer le fluide traité à travers une extrémité ouverte de l'élément de transport dans une première direction ; et
rediriger le fluide traité évacué par l'élément de transport, moyennant quoi le fluide traité s'écoule dans une seconde direction opposée à la première direction.
